# EUROPEAN PATENT APPLICATION

(11) **EP 4 494 454 A1**
(43) Date of publication of application: **22.01.2025**
(21) Application number: 24189498.9
(22) Date of filing: 18.07.2024
(51) Int. Cl.: A01F 15/08

(54) **A BALE PRESS**

(30) Priority: 19.07.2023 IE S20230282
(71) Applicant: McHale Engineering Unlimited Company, Ballinrobe, County Mayo (IE)
(72) Inventor: McHale, Padraic, Christopher, Tumneenane, Clonbur, County Galway, (IE); McHale, Martin, William, Kilmaine Village, Kilmaine, County Mayo, (IE); McHale, Paul, Gerard, 13 Riverside, Woodquay, Galway, (IE); Biggins, John, Patrick, 30 Hillcrest, Claremorris, County Mayo, (IE); Warren, John, Alexander, Coolylaughnan, Hollymount, County Mayo, (IE); Shanahan, Conor, Paul, Claggan, Ballycroy, Westport, County Mayo, (IE); Killeen, Terence, Patrick, Redhill, Tulrahan, Claremorris, County Mayo, (IE)
(74) Representative: Gorman, Francis Fergus

(57) **Abstract**

A roller baler (3) comprising a fixed segment (22), a discharge segment (24) and a closure segment (30) carrying a plurality of bale rotating rollers (17) defining a bale chamber (20) within which crop material is formed into a bale (2). First and second main rams (37, 38) act between a chassis (7) of the baler (3) and the closure segment (30) for pivoting the closure segment (30) about a main pivot axis (15) between a bale forming state and an open state and for urging the closure segment (30) into the bale forming state with a first urging force of a first force value. The first main ram (37) is connected to the closure segment (30) through a secondary spring system (54) by a first connector (56) and a second connector (57). The secondary spring system (54) comprises disc springs (55) configured to act between the first and second connectors (56, 57) with a second urging force of a second force value less than the first force value of the first urging force. This permits limited pivoting of the closure segment (30) about the first pivot axis (15) from the bale forming state thereof when the radial outward force of the bale in the bale chamber (20) on the closure segment (30) exceeds the second force value. This limited movement of the closure segment (30) enables detection of the bale being in a nearing completion state prior to completion of the formation of the bale.

## Description

The present invention relates to a bale press, and in particular, though not limited to a roller baler of the type for rotating, pressing and forming material into a cylindrical bale, for example, for rotating, pressing and forming crop material into a cylindrical bale.

Roller balers are well known for producing cylindrical bales of crop material, which typically, are referred to as round bales. Typically, such round bales are of diameter in the range of 500mm to 2,000mm, and of axial length ranging from 1 ,000mm to 1 ,300mm, and more typically, are of diameter in the range of 1,100mm to 1,400mm and of axial length in the range of 1,100mm to 1,300mm. In general, the crop material is rotated, pressed and formed into a round bale in a bale chamber of the baler. A plurality of bale rotating rollers are arranged in a circular formation, and define the circumferential periphery of the bale chamber. The bale rotating rollers are driven in rotation for rotating the crop material in the bale chamber to form and rotate the bale therein. Some of the bale rotating rollers are carried on a fixed segment which is fixed to a chassis of the baler, and others of the bale rotating rollers are carried on a closure segment, which typically, is pivotal from a bale forming state cooperating with the fixed segment with the bale rotating rollers defining the bale chamber to rotate, press and form the crop material into a round bale, to an open state for accommodating discharge of the bale from the bale chamber.

In some roller balers, some of the bale rotating rollers are carried on a discharge segment, which is pivotal between a bale forming state defining with the fixed segment and the closure segment the bale chamber, and a discharge state for discharging a formed bale from the bale chamber.

A pair of hydraulic rams are provided for operating the closure segment between the bale forming state and the open state, and also for urging the closure segment into the bale forming state with a substantially constant pressure for producing a bale of bale density, which depends on the pressure with which the closure segment is urged into the bale forming state by the rams.

Such roller balers, in general, are towed by a tractor along an elongated windrow of crop material, which is picked-up by a pick-up means and transferred into the bale chamber of the roller baler where it is formed into the bale.

A problem with such roller balers is that the first indication that the tractor driver receives of the formation of the bale in the bale chamber being complete is a signal indicating that the formation of the bale is complete. This presents serious problems, in particular, where the baler is being used to form bales of silage. In general, in the formation of bales of silage, such roller balers are towed along the windrow of silage at speeds up to and beyond 12km/h. Thus, there is a considerable time lapse from the time the driver receives the signal indicating the completion of the formation of the bale and the baler being brought to a halt. During this period the baler may have travelled up to and beyond 20 metres. During this period, further crop material is fed into the bale chamber, which may further increase the diameter of the bale and the bale density. This is undesirable, since in general, it is desirable that bales be formed to a specific diameter, and to a specific bale density, both of which in some of the balers may be selectable, and in general, the bale density is selectable, while the bale diameter may not be selectable. Accordingly, there is a need to provide a baler which addresses this problem.

The present invention is directed towards a baler, and in particular, though not limited to a roller baler which addresses this problem.

According to the invention there is provided a bale press for forming material into a bale thereof, the bale press comprising a first part, a second part moveable relative to the first part into a bale forming state cooperating with the first part to define therewith a bale chamber in which the material is pressed to form the bale, and a primary urging means acting between the first part and the second part to urge the second part towards the first part into the bale forming state with a first urging force of a first force value, wherein a secondary urging means acts between the primary urging means and one of the first part or the second part to urge the primary urging means or the corresponding one of the first part or the second part relative to the other one of the primary urging means and the corresponding one of the first part or the second part into a first state thereof relative to each other with a second urging force with the second part in the bale forming state, the second urging force being of a second force value less than the first force value of the first urging force, the secondary urging means being responsive to an outward force exerted by the material in the bale chamber on the second part exceeding the second force value to permit limited relative movement between the primary urging means and the corresponding one of the first part or the second part relative to the other one of the primary urging means and the corresponding one of the first part or the second part from the first state thereof, and a monitoring means monitoring the relative movement between the primary urging means and the corresponding one of the first part or the second part from the first state thereof for producing a signal indicative of the relative movement between the primary urging means and the corresponding one of the first part or the second part from the first state thereof.

In one embodiment of the invention the signal produced by the monitoring means indicative of the relative movement between the primary urging means and the corresponding one of the first part or the second part from the first state thereof is indicative of the formation status of a bale in the bale chamber, and an alerting means is provided for producing a first alert signal indicative of the formation status of the bale in the bale chamber being in a nearing completion state in response to the signal produced by the monitoring means being indicative of the formation status of the bale in the bale chamber being in the nearing completion state.

In another embodiment of the invention the signal produced by the monitoring means indicative of the relative movement between the primary urging means and the corresponding one of the first part or the second part from the first state thereof is indicative of distance moved by the one of the primary urging means and the corresponding one of the first part or the second part relative to the other one of the primary urging means and the corresponding one of the first part or the second part from the first state thereof.

In another embodiment of the invention the monitoring means is configured to monitor the distance moved by the one of the primary urging means and the corresponding one of the first part or the second part relative to the other one of the primary urging means and the corresponding one of the first part or the second part from the first state thereof, and to produce a signal indicative of the distance moved.

In another embodiment of the invention a control means is provided for reading the signal from the monitoring means indicative of the distance moved by the one of the primary urging means and the corresponding one of the first part or the second part relative to the other one of the primary urging means and the corresponding one of the first part or the second part from the first state thereof, and to operate the alerting means to produce the alert signal in response to the distance moved reaching a predefined distance from the first state of the primary urging means relative to the corresponding one of the first part or the second part.

In one embodiment of the invention a limit means is provided to limit the relative movement between the primary urging means and the corresponding one of the first part or the second part from the first state thereof.

Preferably, the limit means is configured to limit the relative movement between the primary urging means and the corresponding one of the first part or the second part from the first state thereof to the predefined distance.

Preferably, the limit means is configured to connect the primary urging means to the corresponding one of the first part or the second part bypassing the secondary urging means in response to the one of the primary urging means and the corresponding one of the first part or the second part having moved relative to the other one of the primary urging means and the corresponding one of the first part or the second part through the predefined distance from the first state thereof.

Preferably, the alerting means is configured to produce the first alert signal in response to the signal produced by the monitoring means being indicative of the one of the primary urging means and the corresponding one of the first part or the second part having moved relative to the other one of the primary urging means or the corresponding one of the first part and the second part through the predefined distance from the first state thereof.

Advantageously, the limit means comprises a first end stop and a second end stop and is engageable with an engagement member extending from one of the primary urging means or the corresponding one of the first or second parts for limiting relative movement between the primary urging means and the corresponding one of the first and second parts from the first state, and preferably, from the first state through the predefined distance.

Preferably, the engagement member is engageable with the first end stop when the primary urging means and the corresponding one of the first part or the second part are in the first state relative to each other, and advantageously, the engagement member is engageable with the second end stop when the one of the primary urging means or the corresponding one of the first and second parts has moved from the first state through the predefined distance.

Preferably, on the engagement member engaging the second end stop further movement of the one of the primary urging means or the corresponding one of the first part or the second part in a direction from the first state thereof, results in the primary urging means acting on the corresponding one of the first part or the second part directly through the limit means.

In one embodiment of the invention the limit means comprises a limit slot, and preferably, the limit slot terminates in its respective opposite ends in the first and second end stops. Advantageously, the opposite ends of the limit slot defines the respective first and second end stops.

In another embodiment of the invention the limit means comprises a limit member and the limit slot extends through the limit member.

In one embodiment of the invention the limit member is rigidly coupled to the one of the first part or the second part, and preferably, is rigidly coupled to the second part. Advantageously, the engagement member extends from the primary urging means.

In one embodiment of the invention the engagement member comprises a pivot shaft pivotally mounted on the primary urging means.

In one embodiment of the invention a first connecting means is provided for connecting the primary urging means to the secondary urging means, and preferably, a second connecting means is provided for connecting the secondary urging means to the corresponding one of the first part or the second part to which the primary urging means is connected through the secondary urging means. Preferably, the secondary urging means is configured to act between the first connecting means and the second connecting means.

Preferably, the first and second connecting means are moveably connected relative to each other to permit the relative movement between the primary urging means and the corresponding one of the first part or the second part from the first state thereof, and preferably, the first and second connecting means are moveably connected relative to each other through the secondary urging means.

In one embodiment of the invention a guide means is provided for guiding the relative movement between the primary urging means and the corresponding one of the first part or the second part from the first state thereof.

Advantageously, the guide means is configured to guide the first and second connecting means relative to each other.

Preferably, the guide means is provided on one of the first and second connecting means, and is engageable with the other one of the first and second engaging means.

In one embodiment of the invention the guide means comprises a guide spigot extending from one of the first and second connecting means, and preferably, the guide spigot is slideably engageable with the other one of the first and second connecting means.

In one embodiment of the invention the second connecting means comprises the guide spigot, and advantageously, the guide spigot comprises a carrier member for carrying the secondary urging means, with the secondary urging means located on the carrier member between the first and second connecting means.

In another embodiment of the invention the primary urging means is connected to the corresponding one of the first part or the second part through a connecting mechanism, and preferably, the connecting mechanism is pivotally coupled to the primary urging means. Advantageously, the connecting mechanism comprises the first and the second connecting means.

In one embodiment of the invention the first connecting means comprises a first connector, and the second connecting means comprises a second connector.

Preferably, the guide means extends from the second connector, and preferably, is engageable with the first connector, and advantageously, is slideably engageable with the first connector.

In another embodiment of the invention the first connector is connected to the primary urging means, and the second connector is connected to the one of the first part and the second part, and preferably, is connected to the second part.

In one embodiment of the invention the secondary urging means acts between the primary urging means and the second part.

In one embodiment of the invention the predefined distance lies in the range of 1 mm to 20mm, and preferably, lies in the range of 2mm to 10mm, and ideally, is approximately 5mm.

In one embodiment of the invention a cross-member extending from the second part is coupled to the second connecting means, and preferably, is rigidly coupled to the second connecting means.

In one embodiment of the invention the secondary urging means comprises a resilient urging means, and preferably, a compressible resilient urging means.

In another embodiment of the invention the secondary urging means comprises at least one disc spring defining a major concave surface and an opposite major convex surface.

In one embodiment of the invention the secondary urging means comprises at least two of the disc springs mounted in series with the major concave surfaces or the major convex surfaces of adjacent ones of the disc springs facing each other.

In another embodiment of the invention the secondary urging means comprises at least two disc springs mounted in parallel with the major concave surface of each disc spring facing the major convex surface of an adjacent disc spring.

In another embodiment of the invention the secondary urging means comprises a plurality of disc springs, the disc springs being arranged in at least two sets of the disc springs, each set of the disc springs comprising at least two parallel mounted disc springs with the major concave surface of adjacent ones of the parallel mounted disc springs of each set thereof facing the major convex surface of the other adjacent one thereof, and preferably, the at least two sets of the parallel mounted disc springs are series mounted with the major concave surfaces or the major convex surfaces of adjacent disc springs of the adjacent sets of parallel mounted disc springs facing each other. Preferably, at least three sets of parallel mounted disc springs are provided series mounted.

In another embodiment of the invention the secondary urging means comprises four sets of parallel mounted disc springs arranged in series.

In one embodiment of the invention each disc spring comprises a central opening extending therethrough, and the disc springs are mounted on the first connecting means or the second connecting means with the one of the first or the second connecting means extending through and engaging the central openings of the disc springs.

Preferably, the one of the first connecting means or the second connecting means extending through the central openings of the disc springs cooperates with the other one of the first connecting means and the second connecting means for guiding the relative movement between the primary urging means and the corresponding one of the first part or the second part from the first state thereof.

In one embodiment of the invention the carrier member of the second connecting means extends through the central openings of the disc springs, and preferably, slideably engages the central openings of the disc springs.

In one embodiment of the invention a flange extends outwardly from the carrier member, and cooperates with the first connecting means for retaining the disc springs captive between the first connecting means and the flange.

In one embodiment of the invention the second force value of the second urging force exerted by the secondary urging means is adjustable, and preferably, the second force value of the second urging force is adjustable by adjusting the spacing between the flange of the carrier member and the first connecting means between which the disc springs are retained captive.

In another embodiment of the invention the first force value of the first urging force applied by the primary urging means to urge the second part into the bale forming state is configured to determine the density to which the bale is formed.

Preferably, the first force value of the first urging force applied by the primary urging means to urge the second part into the bale forming state is selectable.

In one embodiment of the invention the first force value of the first urging force applied by the primary urging means urging the second part into the bale forming state lies in the range of 8,000N to 30,000N, and preferably, lies in the range of 10,000N to 27,000N.

In another embodiment of the invention the second force value of the second urging force applied by the secondary urging means between the primary urging means and the corresponding one of the first part or the second part for urging the one of the primary urging means or the corresponding one of the first part or the second part relative to each other into the first state thereof is substantially equal to the outward force applied to the second part by the material in the bale chamber as the formation of the bale is in the nearing completion state.

In one embodiment of the invention the second force value of the second urging force applied by the secondary urging means between the primary urging means and the corresponding one of the first part or the second part for urging the one of the primary urging means or the corresponding one of the first part or the second part relative to each other into the first state thereof lies in the range of 1 ,750N to 6,000N, and preferably, lies in the range of 2,000N to 5,000N.

In one embodiment of the invention the monitoring means is configured to monitor movement of the second part relative to the first part from the bale forming state, and preferably, the monitoring means is configured to monitor movement of the second part relative to the first part from the position of the second part relative to the first part on the second part having moved through the predefined distance relative to the first part from the bale forming state. Advantageously, the monitoring means is configured to produce a signal indicative of the distance travelled by the second part relative to the first part from the bale forming state, or from the position of the second part relative to the first part on the second part having moved through the predefined distance relative to the first part from the bale forming state, and advantageously, the control means is configured to determine completion of formation of a bale in the bale chamber in response to the distance travelled by the second part relative to the first part from the bale forming state or from the position of the second part relative to the first part on the second part having moved through the predefined distance relative to the first part from the bale forming state.

In one embodiment of the invention the monitoring means is configured to produce a signal indicative of the spacing between the second part and the first part, and preferably, indicative of the spacing between the second part and the first connecting means.

In one embodiment of the invention the second part is urgeable by the primary urging means between the bale forming state and an open state for discharge of a bale from the bale chamber.

Preferably, the primary urging means comprises at least one main ram, and advantageously, the engagement member is connected to one of the at least one main rams.

In one embodiment of the invention the primary urging means comprises a pair of main rams, and preferably, the secondary urging means is configured to act between one of the main rams and the corresponding one of the first part or the second part.

Preferably, the main rams are spaced apart and are located on respective opposite sides of the first and second parts of the bale press.

In one embodiment of the invention each main ram of the primary urging means comprises a cylinder and a piston rod extending from the cylinder.

Preferably, the engagement member extends transversely of the piston rod of one of the main rams adjacent a distal end thereof, and advantageously, the engagement member comprises a pivot shaft pivotal in the piston rod of the one of the main rams adjacent a distal end thereof.

In another embodiment of the invention the first connecting means is connected to the one of the main rams with which the secondary urging means acts.

Preferably, the monitoring means is mounted on the limit means or the cylinder of the main ram connected to the first connecting means, and preferably, the monitoring means is mounted on the cylinder of the main ram connected to the first connecting means. Preferably, the monitoring means cooperates with a target means for monitoring the relative movement, and advantageously the target means is secured to the other one of the main ram and the limit means on which the monitoring means is not mounted.

In one embodiment of the invention the second part is pivotally connected to the first part and is pivotal about a main pivot axis relative to the first part from the bale forming state.

In another embodiment of the invention the monitoring means is configured to produce a signal indicative of the angular displacement of the second part relative to the first part about the main pivot axis from the bale forming state.

In another embodiment of the invention the bale press comprises a roller baler, and preferably, the first part and the second part carry respective pluralities of bale rotating rollers configured to define the bale chamber as a cylindrical bale chamber.

Preferably, the bale rotating rollers of the second part define approximately 180° of the cylindrical bale chamber.

In another embodiment of the invention at least a portion of the first part comprises a fixed part, and preferably, another portion of the first part comprises a discharge part, and preferably, the discharge part is moveable relative to the fixed part from a bale forming state cooperating with the fixed part of the first part and the second part to define the bale chamber, and a discharge state for discharging a bale from the bale chamber.

Preferably, the primary urging means acts between the fixed part of the first part and the second part.

The invention also provides a combined baler/bale wrapper comprising the bale press according to the invention and a bale wrapper.

The advantages of the baler according to the invention are many. A particularly important advantage of the baler according to the invention is that when the driver of the tractor towing the baler receives the first alert signal indicative of the formation status of the bale in the bale chamber being indicative of the bale in the bale chamber being in the nearing completion state, the driver may commence reducing the speed of the baler so that when the driver receives the second alert signal indicative of the formation status of the bale in the bale chamber being indicative of the completion of the formation of the bale in the bale chamber, the tractor and the baler may be immediately brought to a halt. This is a particularly important advantage, since as discussed above in the baling of silage, a baler may be towed by a tractor at speeds of up to 12 kilometres per hour and higher. Thus, by reducing the speed of the tractor on receiving the first alert signal, the tractor and the baler may be brought to an immediate halt on receiving the second alert signal. This, thus avoids the baler being towed significant distances, after completion of the formation of the bale in the bale chamber, which at speeds of 12 kilometres per hour, may result in the baler being towed up to and beyond 20 metres from the time of completion of the formation of the bale in the bale chamber. During this period of travel of the baler from the time the formation of the bale has been completed to the time the baler has been brought to a halt, further crop material, namely, silage, is fed into the bale chamber, thus further increasing the bale density and the bale diameter beyond the selected bale density and the selected bale diameter, if the bale diameter is selectable, otherwise beyond the diameter to which the bale should have been formed.

Accordingly, the connection of the primary urging means to the one of the first and second parts of the bale press through the secondary urging means and monitoring the relative movement between the primary urging means and the corresponding one of the first part or the second part of the bale press, permits the formation of bales precisely to the selected bale density and to the selected bale diameter. An additional advantage of the bale press according to the invention is that by virtue of the fact that the bale press can be brought to a halt just as the formation of the bale in the bale chamber has been completed, there is no risk of the bale being formed to a higher bale density or to a greater diameter than those selected. Additionally, by avoiding excess delivery of crop material into the bale chamber after the formation of the bale has been completed, any risk of overloading of the components of the bale press which in turn would lead to excessive wear on the components of the bale press is avoided. Additionally, by avoiding feeding of further crop material into the bale chamber after the formation of the bale has been completed, the risk of blockages occurring as the crop material is being fed into the bale chamber by the pick-up mechanism is avoided.

The invention will be more clearly understood from the following description of a preferred embodiment thereof which is given by way of example only with reference to the accompanying drawings, in which:
Fig. 1 is a perspective view of a combined baler/bale wrapper according to the invention comprising a baler according to the invention and a bale wrapper,
Fig. 2 is another perspective view of the combined baler/bale wrapper of Fig. 1 with parts of the baler in different states to those of Fig. 1,
Fig. 3 is a cross-sectional side elevational view of a part of the combined baler/bale wrapper of Fig. 1,
Fig. 4 is a perspective view of a portion of the baler of the combined baler/bale wrapper of Fig. 1,
Fig. 5 is a side elevational view of the portion of Fig. 5 of the baler of the combined baler/bale wrapper of Fig. 1,
Fig. 6 is an end elevational view of the portion of Fig. 4 of the baler of the combined baler/bale wrapper of Fig. 1,
Fig. 7 is a side elevational view of the portion of Fig. 4 of the baler of the combined baler/bale wrapper of Fig. 1 with a part removed therefrom,
Fig. 8 is a perspective view of a detail of the portion of Fig 4 of the baler of the combined baler/bale wrapper of Fig. 1,
Fig. 9 is an end elevational view of the portion of Fig. 8 of the baler of the combined baler/bale wrapper of Fig. 1,
Fig. 10 is a perspective view of the portion of Fig. 8 with a part of the portion of Fig. 8 removed of the combined baler/bale wrapper of Fig. 1,
Fig. 11 is a side elevational view of the portion of Fig. 8 with the part removed as in Fig. 10 of the combined baler/bale wrapper of Fig. 1,
Fig. 12 is a view similar to Fig. 11 with a part of the portion of Fig. 11 in a different state to that of Fig. 11 of the combined baler/bale wrapper of Fig. 1,
Fig. 13 is a cross-sectional side elevational view of the portion of Fig. 9 of the baler/bale wrapper of Fig. 1 on the line XIII-XIII of Fig. 9,
Fig. 14 is a cross-sectional side elevational view of the portion of Fig. 9 of the baler/bale wrapper of Fig. 1 on the line XIV-XIV of Fig. 9,
Fig. 15 is a cross-sectional side elevational view of the portion of Fig. 9 of the baler/bale wrapper of Fig. 1 on the line XV-XV of Fig. 9,
Fig. 16 is a cross-sectional end elevational view of the portion of Fig. 11 of the baler/bale wrapper of Fig. 1 on the line XVI-XVI of Fig. 11,
Fig. 17 is an enlarged cross-sectional side elevational view of a detail of the portion of the Fig. 8 of the baler/bale wrapper of Fig. 1, and
Fig. 18 is a block diagram of a part of a control circuit of the combined baler/bale wrapper of Fig. 1.

Referring to the drawings there is illustrated a combined baler/bale wrapper according to the invention indicated generally by the reference numeral 1 for producing round bales 2 of crop material, for example, silage, wrapped end-to-end, typically, in plastics film material. Such wrapped bales of silage and other crop materials will be well known to those skilled in the art, and further description should not be required.

The combined baler/bale wrapper 1 comprises a bale press according to the invention, in this case a roller baler according to the invention indicated generally by the reference numeral 3 for forming the bales 2 of crop material and a two-axis bale wrapper 5 for wrapping each bale 2 produced by the roller baler 3 end-to-end in plastics film material. The baler 3 and the bale wrapper 5 are mounted on a chassis 7 carried on a pair of rotatably mounted main ground engaging wheels 9. A towing arm 10 extends forwardly from the chassis 7 for coupling to a prime mover, for example, a tractor (not shown) for towing and powering the combined baler/bale wrapper 1.

The bale wrapper 5 is mounted on the chassis 7 to the rear thereof for receiving formed bales from the roller baler 3 sequentially for wrapping thereof. The combined baler/bale wrapper 1 is substantially similar to a combined baler/bale wrapper disclosed in PCT Published Patent Application Specification No. WO 021076183, and only the parts of the combined baler/bale wrapper which are of relevance to the invention will be described in detail. The bale wrapper 5 is substantially similar to the bale wrapper disclosed in PCT Patent Application Specification No. WO 02/076183, and further description of the bale wrapper should not be required.

Turning now to the baler 3, the baler 3 as will be described below is configured to produce a first alert signal to indicate to a driver of the tractor towing the baler/bale wrapper 1 that the formation of the bale 2 by the baler 3 is nearing completion, in other words that the formation of the bale 2 by the baler 3 is in a nearing completion state, so that the driver may be ready to stop the baler/bale wrapper 1 when formation of the bale 2 by the baler 3 is completed. The baler 3 is configured to produce a second alert signal to alert the driver of a tractor towing the baler/bale wrapper 1 that the formation of the bale by the baler 3 is complete.

The baler 3 comprises a first part 12 which is partly fixed to the chassis 7, and a second part 14 which is pivotally coupled to the first part 12 about a main pivot axis 15. The first and second parts 12 and 14 carry respective pluralities of bale rotating rollers 17 of similar diameter, and the second part 14 is cooperable with the first part 12 in a bale forming state of the second part 14 with the bale rotating rollers 17 configured in a substantially circular configuration to define a circumferential periphery 19 of a cylindrical bale chamber 20 within which crop material is rotated, pressed and formed into the bales 2.

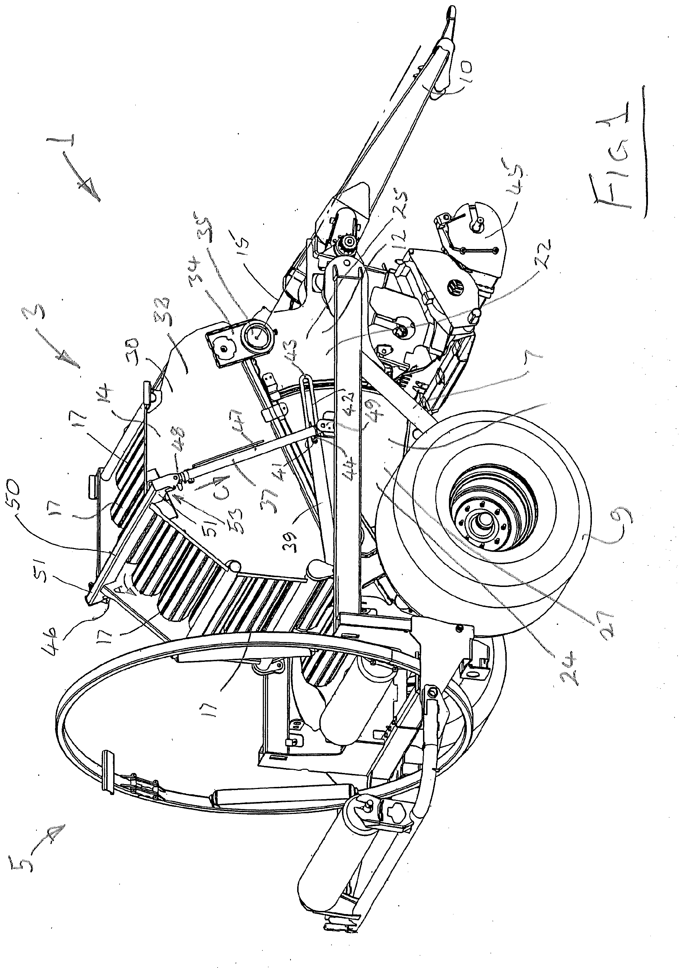

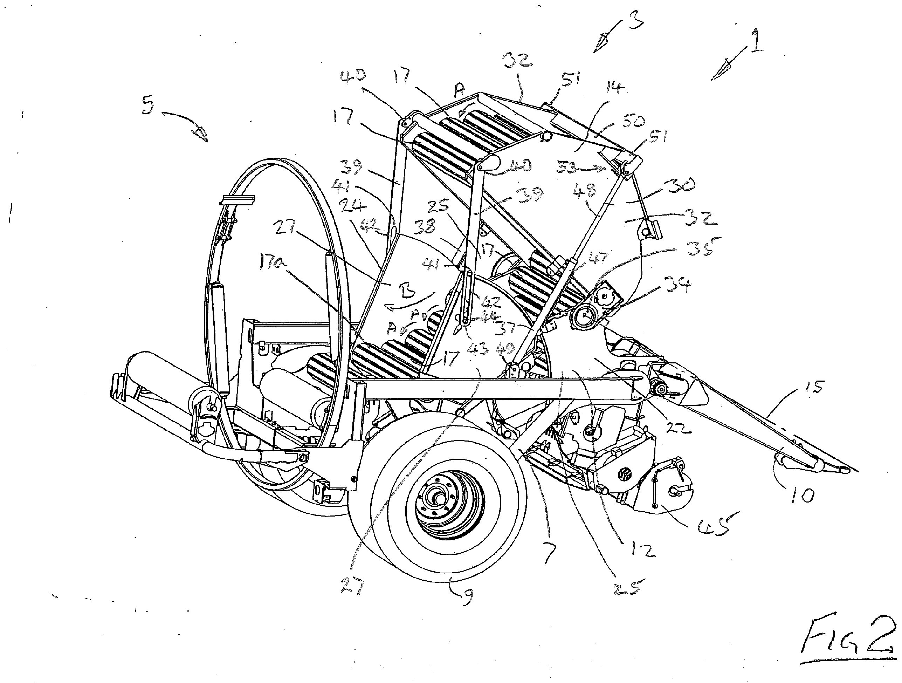

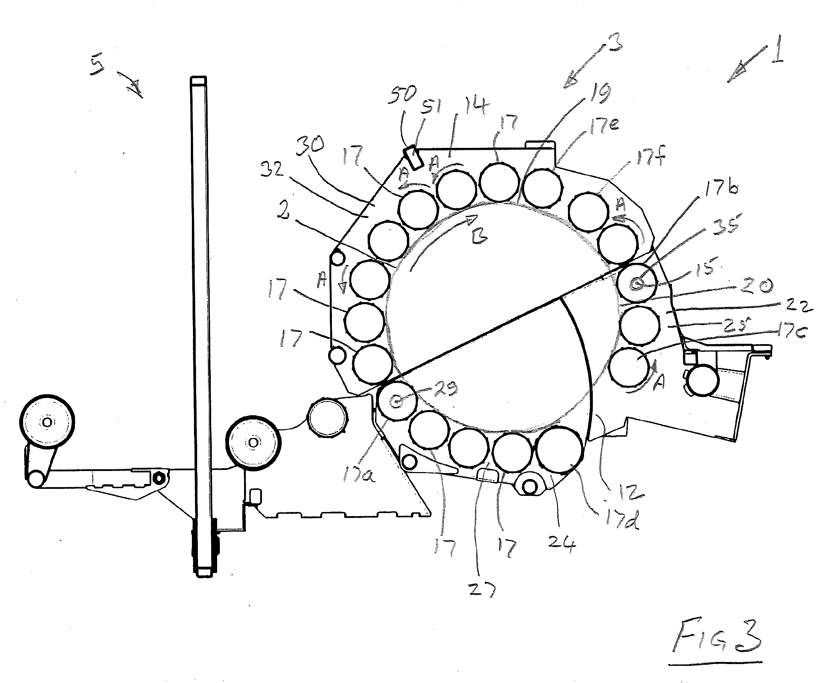

The first part 12 comprises a fixed segment 22 fixedly secured to the chassis 7, and a discharge segment 24, which acts as a discharge means for discharging the formed bales 2 from the bale chamber 20 onto the bale wrapper 5. The fixed segment 22 comprises a pair of spaced apart side walls 25 which are fixedly secured to the chassis 7, and carry three of the bale rotating rollers 17 extending between and rotatably carried in the side walls 25. The discharge segment 24 comprises a pair of spaced apart side walls 27 carrying five of the bale rotating rollers 17 extending between the side walls 27 and rotatably carried in the side walls 27. The discharge segment 24 is pivotally coupled to the chassis 7 about a discharge pivot axis 29, and is pivotal about the discharge pivot axis 29 from a bale forming state illustrated in Figs. 1 and 3 cooperating with the fixed segment 22 and the second part 14 to define the bale chamber 20, to a discharge state illustrated in Fig. 2 for discharging the bales 2 from the bale chamber 20 onto the bale wrapper 5. The discharge pivot axis 29 coincides with the rotational axis of the bale rotating roller 17a of the discharge segment 24, see Fig. 3.

The second part 14 comprises a closure segment 30 comprising a pair of spaced apart side walls 32 which carry ten of the bale rotating rollers 17 with the bale rotating rollers 17 extending between and rotatably carried in the side walls 32. Pivot brackets 34 extending from the respective side walls 32 of the closure segment 30 are pivotally engageable with a shaft 35 of the bale rotating roller 17b of the fixed segment 22 which defines the main pivot axis 15. The closure segment 30 is pivotal relative to the fixed segment 22 and the discharge segment 24 about the main pivot axis 15 from a bale forming state illustrated in Figs. 1 and 3 cooperating with the fixed segment 22 and the discharge segment 24 with the bale rotating rollers 17 defining the bale chamber 20, to an open state illustrated in Fig. 3 for facilitating discharge of each bale 2 from the bale chamber 20.

The side walls 25, 27 and 32 of the fixed segment 22, the discharge segment 24 and the closure segment 30, respectively, define respective opposite ends of the bale chamber 20 when the discharge segment 24 and the closure segment 30 are in their respective bale forming states.

The bale rotating rollers 17 are driven in rotation in the direction of the arrows A by respective chain drives (not shown) as will be understood by those skilled in the art for in turn rotating the crop material and the bale 2 thereof in the bale chamber 20 in the direction of the arrow B, see Fig. 3.

A primary urging means comprising first and second similar double-acting main hydraulic rams 37 and 38, respectively, acting between the chassis 7 and the closure segment 30 operate the closure segment 30 between the bale forming state and the open state. The first and second main rams 37 and 38 also act on the closure segment 30 with a first urging force of a first force value in the direction of the arrow C for urging the closure segment 30 into the bale forming state during formation of the bale 2 in the bale chamber 20, and for maintaining the closure segment 30 in the bale forming state against a radially outwardly acting force exerted on the closure segment 30 by the rotating bale 2 in the bale chamber 20 as the diameter of the rotating bale increases and reaches the diameter of the bale chamber 20. The first urging force exerted by the first and second main rams 37 and 38 on the closure segment 30 maintains the closure segment 30 in the bale forming state until the radial outward force on the closure segment exceeds the first force value of the first urging force. The first urging force of the first force value applied by the first and second main rams 37 and 38 is selectable, for determining the density to which each bale is formed in the bale chamber 20. The greater the first force value of the first urging force applied by the first and second main rams 37 and 38 to the closure segment 30, the higher will be the density of the formed bale. This will be understood by those skilled in the art.

The first urging force of the first force value applied by the first and second main rams 37 and 38 to the closure segment 30 is determined by the hydraulic pressure of the hydraulic fluid applied to the first and second main rams 37 and 38. The hydraulic pressure of the hydraulic fluid applied to the first and second main rams 37 and 38 is selectable to operate each one of the first and second main rams 37 and 38 to apply a force to the closure segment 30 in the range of 4,000N to 15,000N. Thus, the first force value of the first urging force applied by the first and second main rams 37 and 38 to the closure segment 30 is selectable in the range of 8,000N to 30,000N. The selection of the urging force of the first force value is described below.

A pair of link members 39 pivotally coupled to the closure segment 30 at 40 and slideably and pivotally coupled to the discharge segment 24, pivot the discharge segment 24 about the discharge pivot axis 29 between the bale forming state and the discharge state as the closure segment 30 is being urged from the bale forming state to the open state by the first and second main rams 37 and 38. A delay slot 42 in each link member 39 slideably and pivotally engages a corresponding pivot pin 44 extending sidewardly outwardly from the corresponding side wall 27 of the discharge segment 24 to provide a delay, whereby operation of the discharge segment 24 from the bale forming state to the discharge state is delayed until after the closure segment 30 has been pivoted from the bale forming state a sufficient angular distance about the main pivot axis 15 to accommodate discharge of the bale 2 from the bale chamber 20. Each delay slot 42 extends from a proximal end 41 to a distal end 43. When the closure segment 30 is in the bale forming state, the pivot pins 44 engage the corresponding delay slots 42 adjacent the proximal ends 41 thereof. Accordingly, as the closure segment 30 is being urged from the bale forming state to the open state by the first and second main rams 37 and 38, the pivot pins 44 must travel along the corresponding delay slots 42 from the proximal ends 41 to the distal ends 43 thereof before the discharge segment 24 commences to be urged from the bale forming state to the discharge state, thereby delaying operation of the discharge segment 24 from the bale forming state until the closure segment 30 has pivoted a sufficient angular distance about the main pivot axis 15 from the bale forming state to accommodate discharge of a bale from the bale chamber.

A pick-up mechanism 45 extending forwardly and downwardly from the chassis 7 picks up crop material from an elongated windrow of the crop material lying in a field as the combined baler/bale wrapper 1 is being towed along the windrow by a tractor. The pick-up mechanism 45 urges the picked-up crop material into the bale chamber 20 between one of the bale rotating rollers 17 of the fixed segment 22, namely, the bale rotating roller 17c, and one of the bale rotating rollers 17 of the discharge segment 24, namely, the bale rotating roller 17d. Such pick-up mechanisms as the pick-up mechanism 45 and the operation thereof for urging the picked-up crop material into a bale chamber of a roller baler will be well known and understood by those skilled in the art, and further description should not be required.

A circumferential wrapping material dispensing mechanism (not shown) which will be well known to those skilled in the art is mounted on the closure segment 30 for feeding either net wrapping material or plastics film wrapping material from a roll (also not shown) thereof mounted on a forward end of the chassis 7 for circumferentially wrapping each formed bale 2 in the bale chamber 20 prior to discharge of the bale from the bale chamber 20. The wrapping material is fed from the dispensing mechanism (not shown) into the bale chamber 20 between two of the bale rotating rollers 17 of the closure segment 30, namely, between the bale rotating rollers 17e and 17f, see Fig. 3.

Returning now to the first and second main rams 37 and 38, each of the first and second main rams 37 and 38 comprise a cylinder 47 and a piston rod 48 extending from the cylinder 47. The cylinder 47 of each of the first and second main rams 37 and 38 is pivotally coupled to the chassis 7 by a corresponding pivot mounting 49. A cross-member 50 extends between the side walls 32 of the closure segment 30 and is secured to the side walls 32. End portions 51 of the cross-member 50 extend from the cross-member 50 and outwardly beyond the side walls 32. The piston rod 48 of the second main ram 38 is pivotally coupled to the closure segment 30 by a pivot coupling bracket 46, which is mounted on and secured to the adjacent one of the end portions 51 of the cross-member 50. The piston rod 48 of the second main ram 38 is pivotal relative to the pivot coupling bracket 46 for permitting pivoting of the second main ram 38 relative to the closure segment 30 as the first and second main rams 37 and 38 urge the closure segment 30 between the bale forming state and the open state.

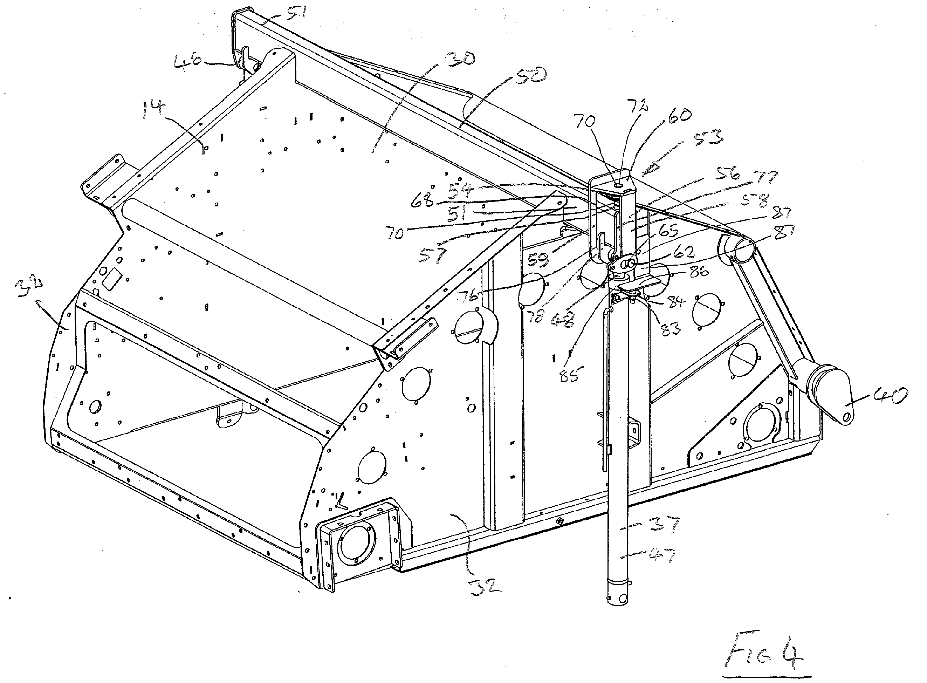

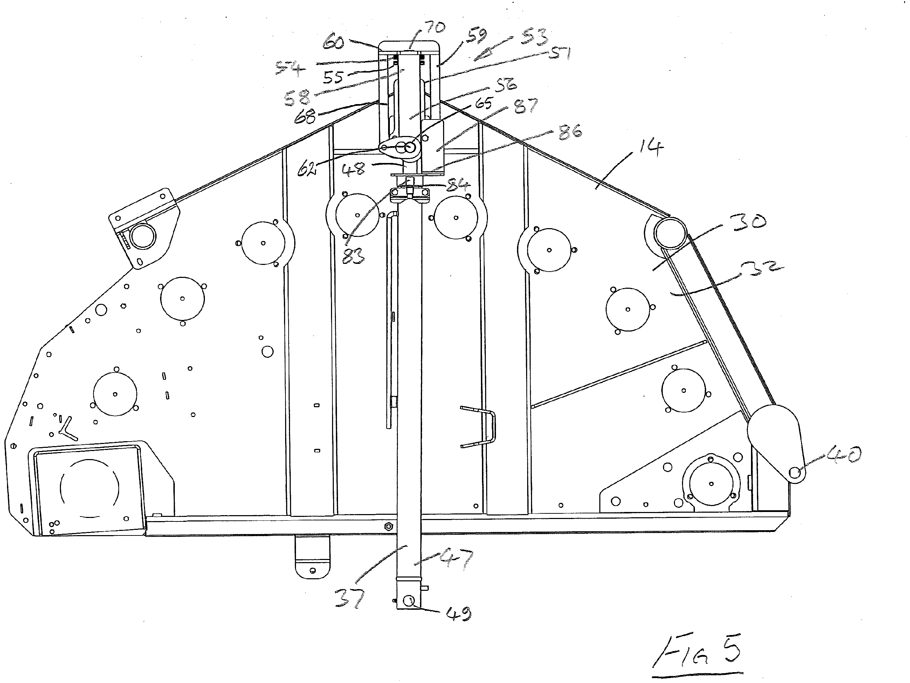

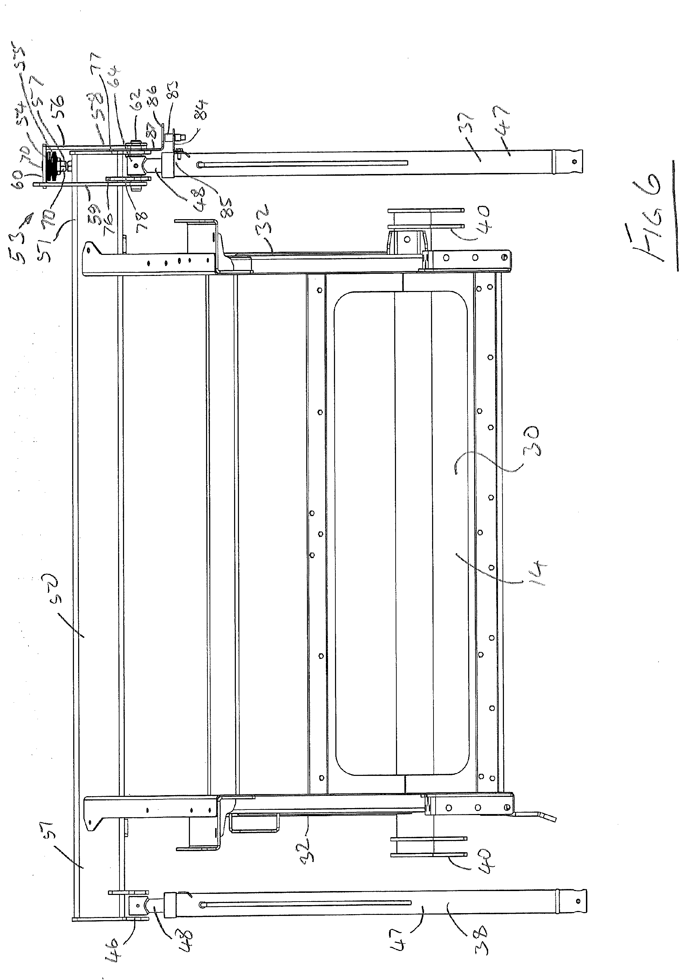

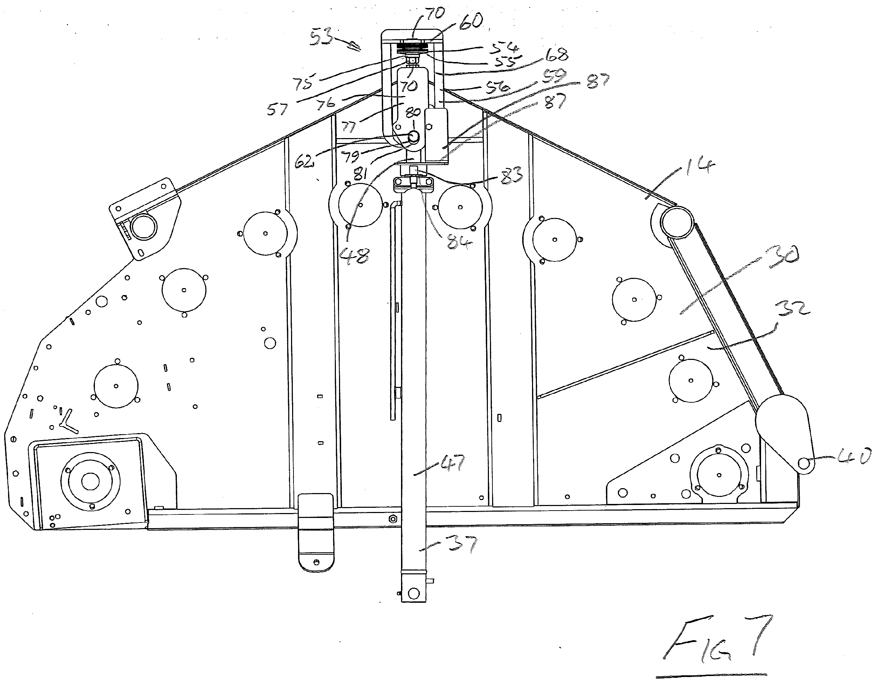

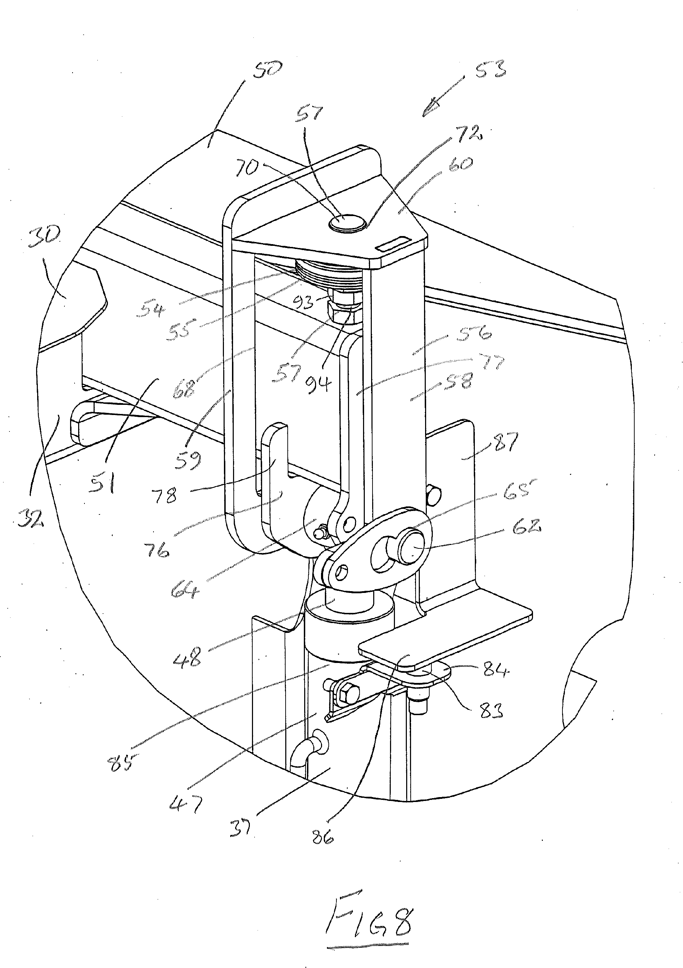

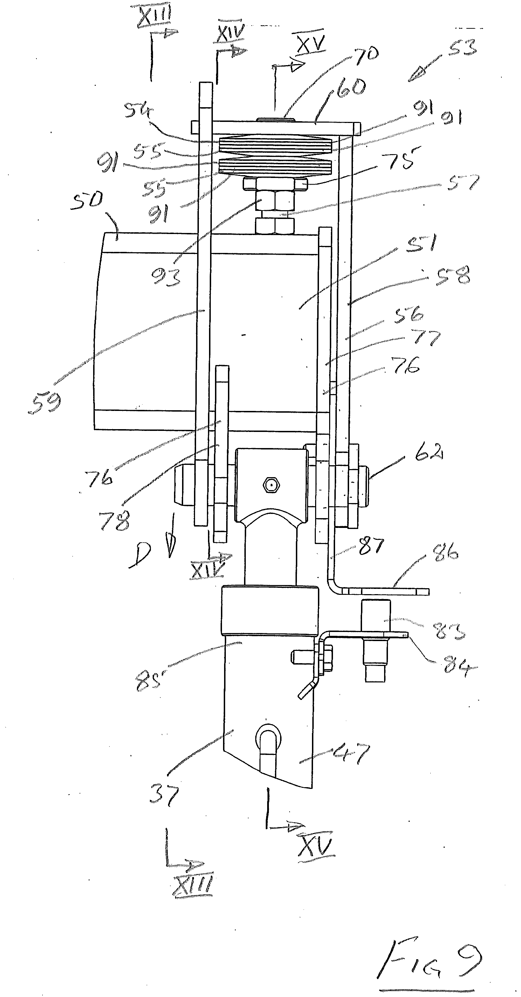

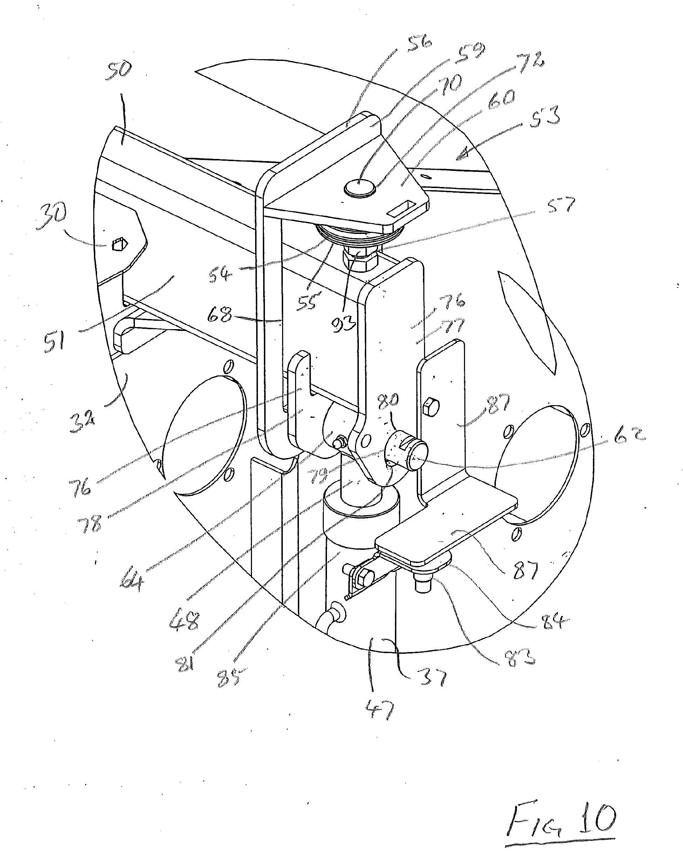

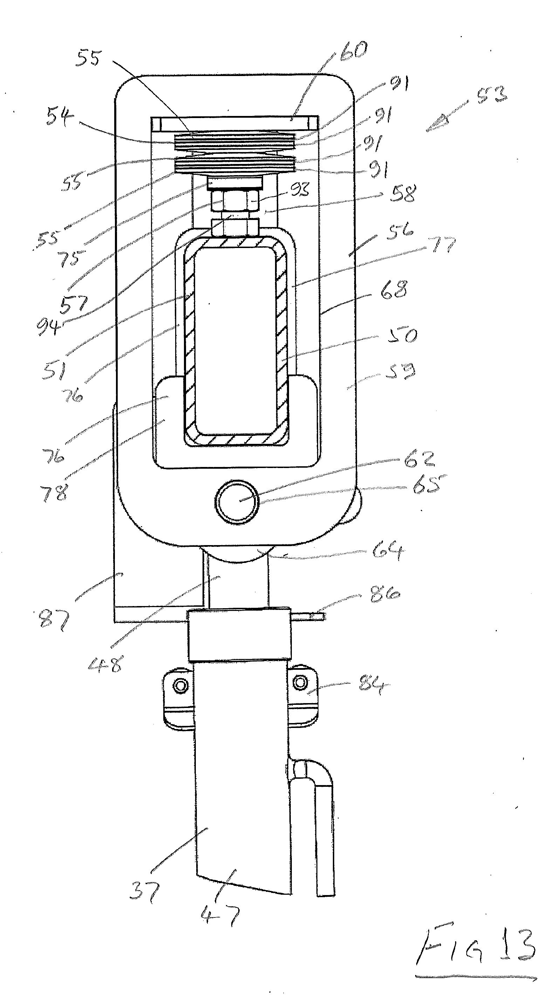

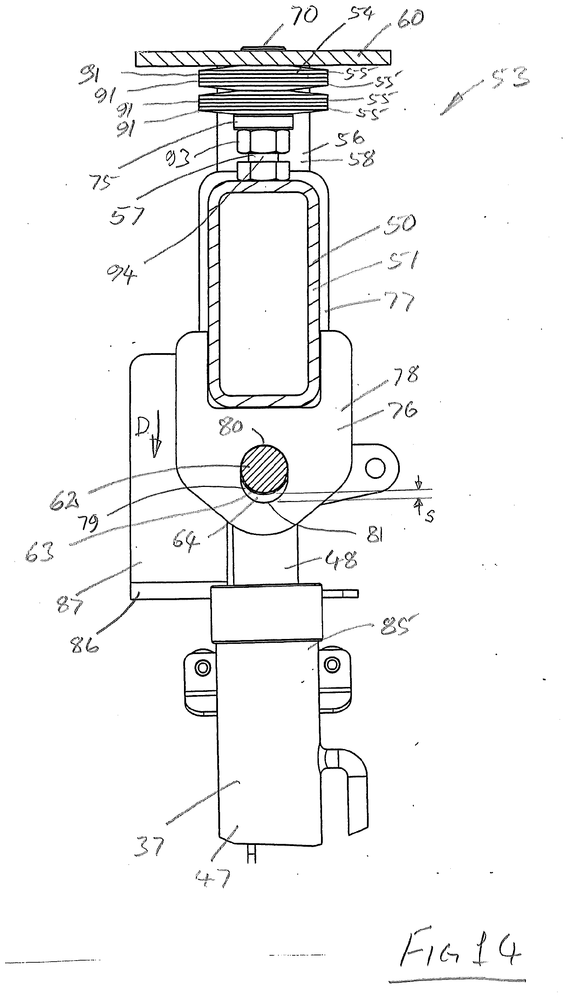

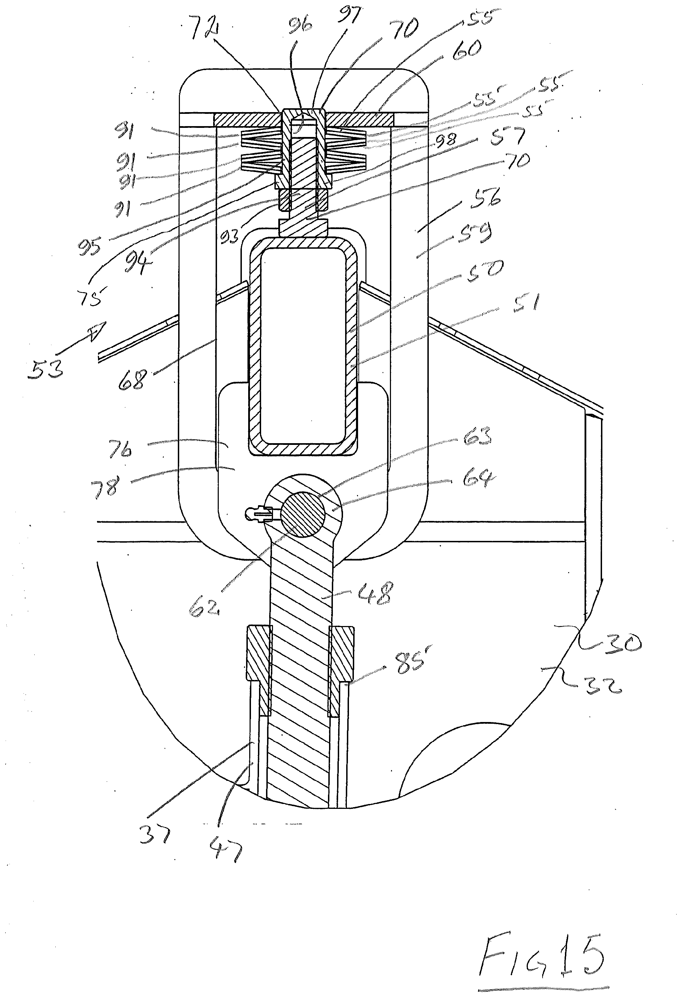

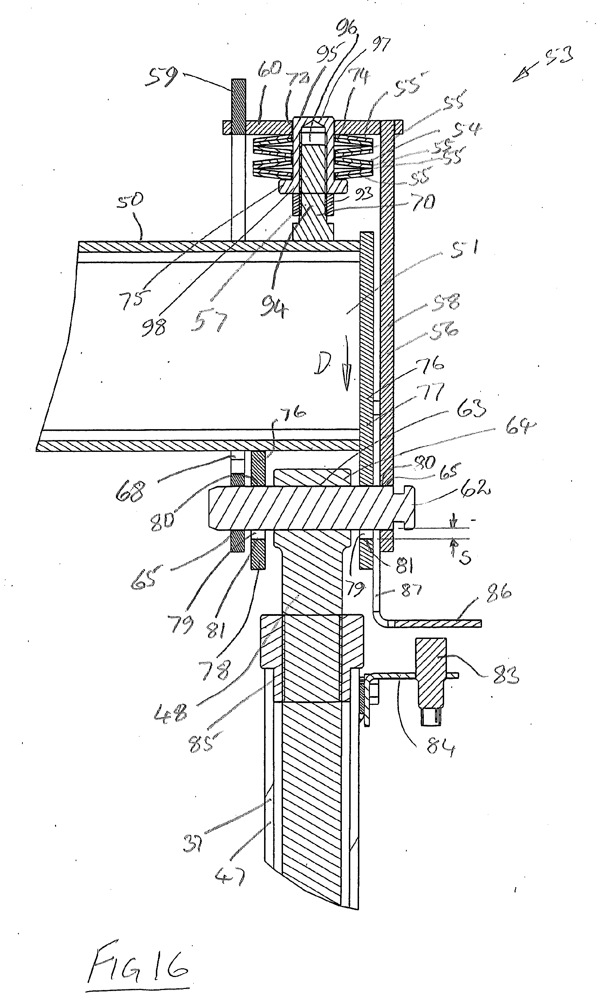

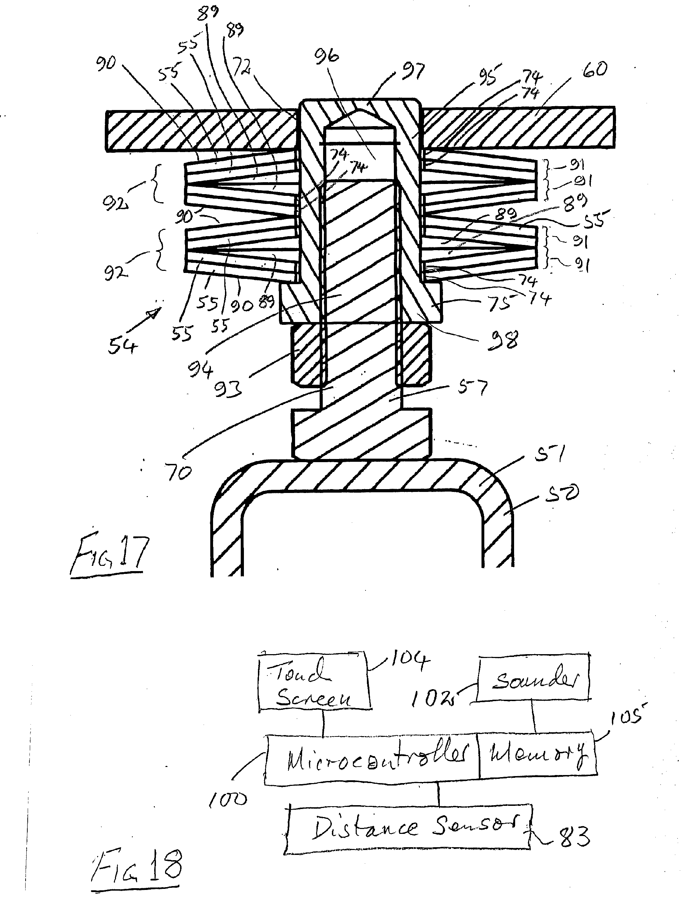

Referring now to Figs. 4 to 17 the first main ram 37 is pivotally coupled to the closure segment 30 through a secondary urging means by a connecting mechanism indicated generally by the reference numeral 53. The secondary urging means comprises a secondary spring system 54 comprising a plurality of circular disc springs 55 configured as a resilient compression urging means as will be described below. The secondary spring system 54 acts between the first main ram 37 and the closure segment 30 with a second urging force of a second force value. The second force value of the second urging force is less than the first force value applied by the first and second main rams 37 and 38 to the closure segment 30, so that limited relative movement is permitted between the closure segment 30 and the first main ram 37 as the radial outward force of the bale in the bale chamber 20 acting on the closure segment 30 exceeds the second force value for providing an indication of the formation status of the bale in the bale chamber 20 as will be described in detail below.

Turning initially to the connecting mechanism 53, the connecting mechanism 53 comprises a first connecting means in this case a first connector 56 for connecting the piston rod 48 of the first main ram 37 to the secondary spring system 54, and a second connecting means in this case a second connector 57 connecting the secondary spring system 54 to the closure segment 30. The second connector 57 is described below and connects the secondary spring system 54 to the closure segment 30 through an adjacent end portion 51 of the cross-member 50 of the closure segment 30.

The first connector 56 comprises a first connecting plate member 58 and a spaced apart second connecting plate member 59, which are rigidly secured together by a top plate 60. The first and second connecting plate members 58 and 59 are pivotally coupled to the piston rod 48 of the first main ram 37 by a pivot shaft 62. The pivot shaft 62 is pivotally mounted in a pivot bore 63 extending transversely in the piston rod 48 adjacent a distal end 64 thereof. Bores 65 extending through the first and second connecting plate members 58 and 59 engage the pivot shaft 62 for coupling the first connector 56 to the pivot shaft 62 in order to permit pivoting of the piston rod 48 relative to the first connector 56. An opening 68 extending through the second connecting plate member 59 accommodates the adjacent end portion 51 of the cross-member 50 through the second connecting plate member 59 for accommodating relative movement between the adjacent end portion 51 of the cross-member 50 and the first connector 56.

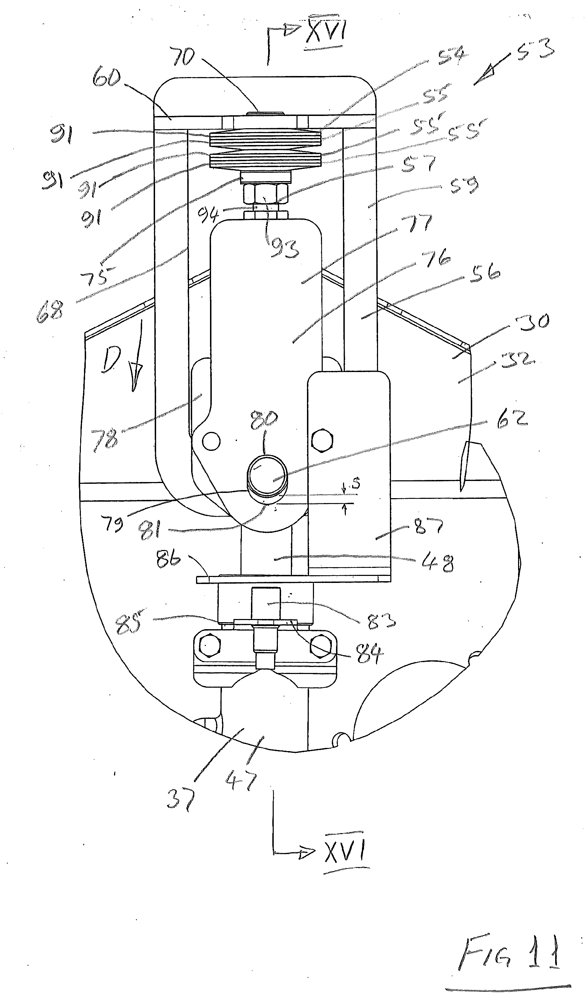

The second connector 57 comprises a carrier member 70 which is rigidly secured to the adjacent end portion 51 of the cross-member 50 and extends towards the top plate 60 of the first connector 56 and slideably engages a bore 72 extending through in the top plate 60. The carrier member 70 extends through central openings 74 in the respective disc springs 55 of the secondary spring system 54. A circular flange 75 extending around and outwardly from the carrier member 70 engages the secondary spring system 54. The secondary spring system 54 is retained between the circular flange 75 and the top plate 60 of the first connector 56 with the secondary spring system 54 acting between the circular flange 75 and the top plate 60 for urging the first and second connectors 56 and 57 away from each other into a first state illustrated in Figs. 11, 14 and 16, and for in turn urging the closure segment 30 and the piston rod 48 of the first main ram 37 into a first state relative to each other when the closure segment 30 is urged by the first and second main rams 37 and 38 into the bale forming state as illustrated in Figs. 1 and 3.

The carrier member 70 by slideably engaging the bore 72 in the top plate 60 of the first connector 56 also acts as a guide spigot to form a guide means for guiding relative movement between the carrier member 70 and the first connector 56 as the closure segment 30 moves relative to the first main ram 37 from the first state thereof.

A limit means for limiting relative movement between the first connector 56 and the second connector 57 from the first state thereof, comprises a limit system 76. The limit system 76 comprises a pair of spaced apart limit members, namely, a first limit member 77 and a second limit member 78 rigidly secured to the adjacent end portion 51 of the cross-member 50. The first and second limit members 77 and 78 are provided with respective aligned limit slots 79 for engaging an engagement member extending from the first main ram 37. In this case the engagement member is provided by the pivot shaft 62, which is pivotal in the piston rod 48 of the first main ram 37. The pivot shaft 62 is pivotally and slideably engageable in the limit slots 79. The limit slots 79 extend between and define first and second end stops 80 and 81, respectively, between which the pivot shaft 62 is slideable in the limit slots 79 in order to limit the relative movement between the first connector 56 and the second connector 57 from the first state thereof to a predefined distance s, see Figs. 11, 12, 14 and 16. In this embodiment of the invention the predefined distance s is approximately 5mm.

The secondary spring system 54 acting between the first and second connectors 56 and 57 urges the limit members 77 and 78 in the direction of the arrow D relative to the first connector 57 and in turn relative to the pivot shaft 62 into the first state with the pivot shaft 62 engaging the first end stops 80 of the limit slots 79, see Figs. 11, 14 and 16. Accordingly, during initial formation of the bale in the bale chamber 20 with the closure segment 30 being urged into the bale forming state by the first and second main rams 37 and 38, the secondary spring system 54 retains the first and second connectors 56 and 57 in the first state thereof with the pivot shaft 62 in engagement with the first end stops 80 of the limit slots 79 for so long as the radial outward force exerted by the bale in the bale chamber 20 on the closure segment 30 does not exceed the second force value applied by the secondary spring system 54 between the first and second connectors 56 and 57. Thus, for so long as the radial outward force exerted by the bale in the bale chamber 20 on the closure segment 30 does not exceed the second force value, the secondary spring system 54 maintains the closure segment 30 in the bale forming state.

Once the radial outward force exerted by the bale in the bale chamber 20 on the closure segment 30 exceeds the second force value, the secondary spring system 54 commences to yield, thereby permitting angular displacement of the closure segment 30 about the pivot axis 15 from the bale forming state to commence. However, since the second main ram 38 acts directly on the closure segment 30, only the portion of the closure segment 30 adjacent the first main ram 37 commences to be angularly displaced about the main pivot axis 15 from the bale forming state. Due to the small angular displacement of the closure segment 30 permitted by the limit members 77 and 78 relative to the overall size of the closure segment 30, the small angular displacement of one side of the closure segment 30 relative to the other side thereof has minimal effect on the closure segment 30.

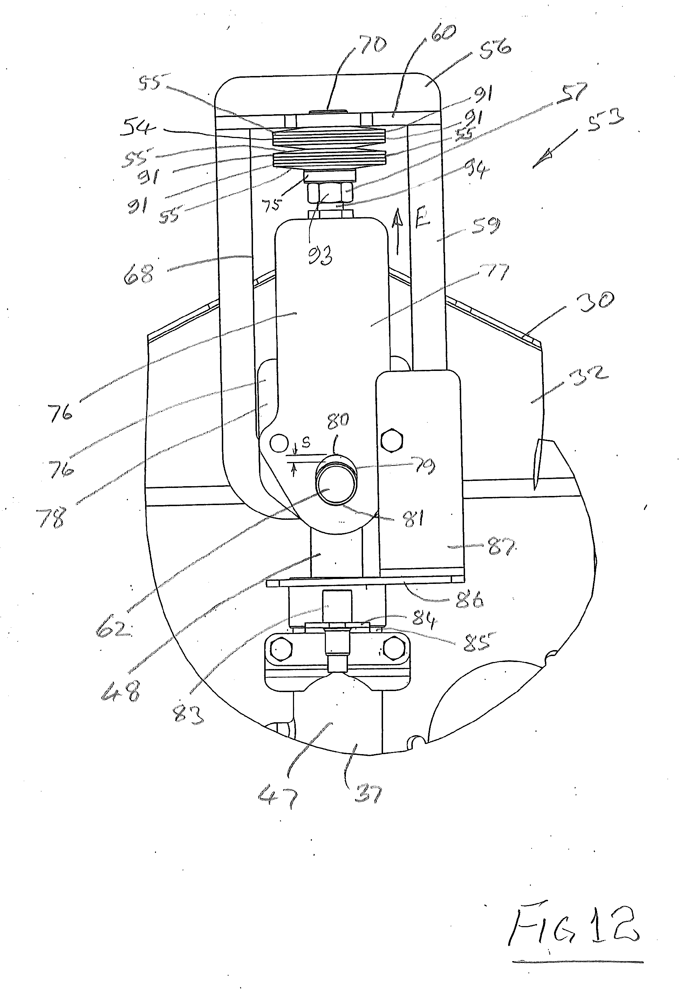

The pivoting of the closure segment 30 about the main pivot axis 15 from the bale forming state results in the limit members 77 and 78 and the second connector 57 being urged in the direction of the arrow E relative to the first connector 56 against the second urging force applied by the secondary spring system 54, thus compressing the secondary spring system 54 see Figs. 12. The first and second limit members 77 and 78 and the second connector 57 continue to be urged in the direction of the arrow E as the closure segment 30 pivots about the main pivot axis 15 from the bale forming state until the pivot shaft 62 engages the second end stops 81 of the limit slots 79. At this stage the second connector 57 has moved relative to the first connector 56 through the predefined distance s, and the first and second connectors 56 and 57 are in a second state with the pivot shaft 62 engaging the second end stops 81 of the limit slots 79.

As discussed above the second force value is less than the first force value, and the secondary spring system 54 is configured so that the second force value is such that the movement of the limit members 77 and 78 and the second connector 57 in the direction of the arrow E relative to the first connector 56 is indicative of the status of the formation of the bale in the bale chamber 20. Further, the secondary spring system 54 is configured so that the second force value of the second urging force applied by the secondary spring system 54 between the first and second connectors 56 and 57 is such that when the first and second limit members 77 and 78 and the second connector 57 has moved from the first state through the predefined distance s and the pivot shaft 62 is in engagement with the second end stops 81, the bale in the bale chamber is in the nearing completion state. Once the limit members 77 and 78 and the second connector 57 have been urged by the closure segment 30 in the direction of the arrow E from the first state through the predefined distance s and the pivot shaft 62 is in engagement with the second end stops 81, the first main ram 37 acts directly on the closure segment 30 through the limit members 77 and 78, and therefore, further angular displacement of the closure segment 30 about the main pivot axis 15 from the bale forming state is prevented until the radial outward force exerted by the bale in the bale chamber 20 on the closure segment 30 exceeds the first urging force of the first force value exerted by the first and second main rams 37 and 38 on the closure segment 30 as will be described below.

A monitoring means, in this embodiment of the invention an ultrasonic distance sensor 83 is fixedly mounted by a mounting bracket 84 to the cylinder 47 of the first main ram 37 adjacent a distal end 85 thereof. A target means, in this case a target plate 86 is rigidly secured to the first limit member 77 by a carrier bracket 87. The ultrasonic distance sensor 83 is configured to produce an electronic signal indicative of the spacing between the distance sensor 83 and the target plate 86. Since the distance sensor 83 is fixedly secured to the cylinder 47 of the first main ram 37, which is pivotally coupled to the chassis 7, and since the first and second limit members 77 and 78 are rigidly coupled to the closure segment 30 through the cross-member 50, the spacing between the distance sensor 83 and the target plate 86 is proportional to the angular displacement of the closure segment 30 about the main pivot axis 15 from the bale forming state.

A control means comprising a signal processor, in this embodiment of the invention is provided by a microcontroller 100 which controls the operation of the combined baler/bale wrapper. The microcontroller 100 is programmed to read the signal produced by the distance sensor 83. The microcontroller 100 reads the signal from the distance sensor 83 from the commencement of the formation of the bale in the bale chamber, in other words, from the time the closure segment 30 is urged into the bale forming state by the first and second main rams 37 and 38.

Until the radial outward force exerted by the bale in the bale chamber 20 on the closure segment 30 exceeds the second force value, the spacing between the distance sensor 83 and the target plate 86 remains substantially constant at an initial spacing indicative of the closure segment 30 being in the bale forming state. On the radial outward force exerted by the bale in the bale chamber 20 on the closure segment 30 beginning to exceed the second force value, the first and second limit means 77 and 78 and the second connector 57 are urged by the closure segment 30 in the direction of the arrow E relative to the first connector 56, which in turn results in the spacing between the distance sensor 83 and the target plate 86 commencing to increase.

When the signal read from the distance sensor 83 is indicative of the first and second limit members 77 and 78 and the second connector 57 having moved through the predefined distance s relative to the first connector 56, the microcontroller 100 is programmed to determine that the bale in the bale chamber is in the nearing completion state. The microcontroller 100 is programmed to output a first alert signal to an alerting means, in this embodiment of the invention a sounder 102 which is located in the cab of a tractor towing the combined baler/bale wrapper 1 to indicate to the tractor driver that the formation of the bale in the bale chamber is in the nearing completion state. Thereby, the tractor driver is given sufficient time to commence reducing the speed of the tractor, so that when the formation of the bale in the bale chamber 20 has been completed, the tractor and the combined baler/bale wrapper 1 may be immediately brought to a halt.

The microcontroller 100 continues to monitor the signal produced by the distance sensor 83, which remains substantially constant until the radial outward force exerted by the bale in the bale chamber 20 on the closure segment 30 begins to exceed the first force value exerted by the first and second main rams 37 and 38 on the closure segment 30. Once the radial outward force exerted by the bale in the bale chamber 20 on the closure segment 30 exceeds the first force value, the closure segment 30 is angularly displaced about the main pivot axis 15 from the bale forming state which it was in when the limit members 77 and 78 had been displaced through the predefined distance s, and thus the spacing between the distance sensor 83 and the target plate 86 commences to increase.

The microcontroller 100 is programmed to determine completion of the formation of the bale in the bale chamber 20 when the spacing between the distance sensor 83 and the target plate 86 corresponds to a predefined angular displacement of the closure segment 30 about the main pivot axis 15 from the bale forming state, which is the angular displacement of the closure segment 30 corresponding to the completion of the formation of the bale in the bale chamber 20. On determining that the signal read from the distance sensor 83 is indicative of the completion of the formation of the bale in the bale chamber 20, the microcontroller 100 is programmed to output a second alert signal to the sounder 102 in the cab of the tractor to alert the tractor driver to the completion of the formation of the bale in the bale chamber 20, so that the tractor and the combined baler/bale wrapper 1 may be brought to an immediate halt.

An interface means, in this embodiment of the invention a touch screen 104 is located in the cab of the tractor towing the combined baler/bale wrapper 1 for displaying data indicative of the formation of the bale in the bale chamber 20 and other related data, and also for permitting inputting of data into the microcontroller 100.

Returning now to the secondary spring system 54, as discussed above, the secondary spring system 54 comprises a plurality of disc springs 55, in this embodiment of the invention eight disc springs 55 which are slideably carried on the carrier member 70 of the second connector 57 with the carrier member 70 extending through and slideably engaging the central openings 74 of the disc springs 55 with the disc springs 55 retained between the top plate 60 of the first connector 56 and the circular flange 75 of the carrier member 70. Each disc spring 55 comprises a major concave surface 89 and an opposite major convex surface 90. The eight disc springs 55 are arranged in four sets 91 of parallel mounted disc springs 55, with each set 91 of parallel mounted disc springs comprising two of the disc springs 55. The disc springs 55 of each set 91 of parallel mounted disc springs are arranged in parallel with the major concave surfaces 89 of one of the disc springs 55 of each set 91 thereof, facing the major convex surface 90 of the adjacent disc spring 55 of the set 91 thereof. The sets 91 of parallel mounted disc springs 55 are arranged in two pairs 92 with the sets 91 of each pair 92 thereof arranged in series. The sets 91 of the parallel mounted disc springs of each pair 92 thereof are arranged so that the adjacent disc springs of the sets 91 of each pair 92 thereof are arranged with the major concave surfaces 89 facing each other. The pairs 92 of the sets 91 of the disc springs 55 are arranged so that the major convex surfaces 90 of adjacent disc springs of each pair 92 face each other.

The second force value of the second urging force exerted by the secondary spring system 54 of the disc springs 55, in this embodiment of the invention is adjustable. The carrier member 70 comprises an inner threaded member 94 and an outer sleeve 95 having a threaded bore 96 extending into the outer sleeve 95. The threaded bore 96 is closed at the distal end 97 of the outer sleeve 95. The inner threaded member 94 is secured to the adjacent end portion 51 of the cross member 50, and engages the threaded bore 96 of the outer sleeve 95. The circular flange 75 extends outwardly from and around the outer sleeve 95 adjacent a proximal end 98 of the outer sleeve 95. By rotating the outer sleeve 95 on the inner threaded member 94, the spacing between the circular flange 75 of the outer sleeve 95 and the top plate 60 of the first connector 56 is adjustable for thereby adjusting the second force value of the second urging force exerted by the secondary spring system 54 between the second connector 57 and the first connector 56. A lock-nut on the inner threaded member 94 is engageable with the proximal end 98 of the outer sleeve 95 to secure the outer sleeve 95 to the inner threaded member 94 with the spacing between the circular flange 75 and the top plate 60 at the desired spacing. In this embodiment of the invention the second force value of the second urging force exerted by the secondary spring system 54 is adjustable between a minimum second force value of approximately 1 ,750N and a maximum second force value of 6,000N. In this embodiment of the invention the second force value of the second urging force applied between the first and second connectors 56 and 57 by the secondary spring system 54 is approximately 4,800N.

In this embodiment of the invention the density to which the bale is to be formed is selectable. The microcontroller 100 is programmed to enable inputting of the actual selected bale density to which the bales are to be formed or the selected hydraulic pressure of the pressurised hydraulic fluid to be applied to the first and second main rams in order to produce the bales of a selected bale density through the touch screen 104. The hydraulic pressure required to be applied to the first and second main rams 37 and 38 to produce the bales of a selected bale density is normally referred to as the hydraulic density pressure. In cases where the actual selected bale density may be inputted to the microcontroller 100 through the touch screen 104, a look-up table (not shown) is located in a memory 105 of the microcontroller 100 with selectable bale densities cross-referenced with corresponding hydraulic density pressures for each of a plurality of different crop materials. By inputting the desired bale density and the type of crop material being baled, the microcontroller 100 determines the appropriate hydraulic density pressure to be applied to the first and second main rams 37 and 38 from the look-up table in the memory 105. Otherwise the selected value of the hydraulic density pressure is inputted through the touch screen 104 to produce the bales of a desired bale density.

Additionally, in this embodiment of the invention the diameter to which the bale may be formed is not selectable, and the bale is formed to a preset diameter. However, in some embodiments of the invention the diameter to which the bale is to be formed may be selectable. In such cases the selectable diameter to which the bale is to be formed would be entered through the touch screen 104.

It is envisaged that in some embodiments of the invention the microcontroller 100 may be programmed to produce a continuously updated signal indicative of the spacing between the distance sensor 83 and the target plate 86 which may be applied to a visual display screen in the cab of the tractor, for example the touch screen 104. Such a continuously updated signal would be graphically displayed on the visual display screen, and would provide a visual graphic display indicating to the tractor driver the progress of the formation of the bale in the bale chamber, including when the formation of the bale is at the nearing completion state, and when the formation of the bale is at the completion state.

In use, with the combined baler/bale wrapper 1 hitched to a tractor, and with the hydraulic system of the tractor coupled to the hydraulic system of the combined baler/bale wrapper 1, and the power take-off shaft of the tractor connected to a main gearbox (not shown) of the combined baler/bale wrapper, as will be well understood by those skilled in the art, the combined baler/bale wrapper is ready for use. The bale density to which the bales are to be formed is entered through the touch screen 105 to the microcontroller 100 either as the actual selected bale density value or as the hydraulic density pressure required to produce the bales of the desired bale density.

If the closure segment 30 and the discharge segment 24 are not already in the bale forming state, the microcontroller 100 operates the first and second main rams 37 and 38 to urge the closure segment 30 and in turn the discharge segment 24 into the bale forming state. The combined baler/bale wrapper 1 is towed by the tractor along an elongated windrow of the crop material to be baled. The pick-up mechanism 45 picks up the crop material from the windrow and transfers the crop material into the bale chamber 20 between the bale rotating rollers 17c and 17d.

The crop material is rotated in the bale chamber 20 by the rotating action of the bale rotating rollers 17 on the crop material therein. As the crop material is progressively fed into the bale chamber 20, the rotating crop material commences to form a round bale thereof. As feeding of the crop material into the bale chamber 20 continues, and the diameter of the rotating bale increases to the diameter of the bale chamber, the density of the bale begins to increase, and the radial outward force exerted on the closure segment 30 by the rotating bale in the bale chamber 20 commences to increase. The radial outward force exerted by the rotating bale on the closure segment 30 is transmitted to the secondary spring system 54 through the second connector 57. When the radial outward force on the closure segment 30 exceeds the second force value exerted by the secondary spring system 54 between the first and second connectors 56 and 57, the secondary spring system 54 commences to yield. This in turn permits the angular displacement of the portion of the closure segment 30 adjacent the first main ram 37 about the main pivot axis 15 to commence from the bale forming state as already described. The pivoting of the closure segment 30 from the bale forming state continues until the pivot shaft 62 on the piston rod 48 of the first main ram 37 is displaced through the predefined distance s from the first end stops 80 to the second end stops 81 of the limit slots 79 of the first and second limit members 77 and 78. The microcontroller 100 on detecting that the signal read from the distance sensor 83 is indicative of the pivot shaft 62 having been displaced through the predefined distance s from the first end stops 80 to the second end stops 81, the microcontroller 100 outputs the first alert signal to the sounder 102, thereby alerting the tractor driver to the bale being in the nearing completion state. The tractor driver then may commence reducing the speed of the tractor and in turn the combined baler/bale wrapper 1 to await the second alert signal.

Once the pivot shaft 62 of the piston rod 48 of the first main ram 37 has engaged the second end stops 81 of the first and second limit member 77 and 78, the urging force applied by the first main ram 37 is applied directly to the cross-member 50 through the first and second limit members 77 and 78, and thus, the force applied by the first and second main rams 37 and 38 to the closure segment 30 is equal to the first force value of the first urging force. The application of the first urging force of the first force value to the closure segment 30 by the first and second main rams 37 and 38 prevents further angular displacement of the closure segment 30 about the main pivot axis 15 until the radial outward force exerted by the rotating bale in the bale chamber 20 on the closure segment 30 exceeds the first force value of the first urging force. At that stage, the closure segment 30 commences to pivot about the main pivot axis 15 from the bale forming state.

The microcontroller 100 continues reading the signal produced by the distance sensor 83. On the signal from the distance sensor 83 being indicative of the closure segment 30 having been angularly displaced about the main pivot axis 15 through an angular displacement to produce the bale of the preset diameter, the microcontroller 100 outputs the second alert signal to the sounder 102 alerting the tractor driver to the completion of the formation of the bale in the bale chamber 20. The tractor driver may then immediately bring the tractor and in turn the combined baler/bale wrapper 1 to a halt. The microcontroller 100 is programmed to then operate the dispensing mechanism (not shown) for dispensing wrapping material into the bale chamber 20 for circumferential wrapping of the bale in the bale chamber 20.

On completion of circumferential wrapping of the bale, the microcontroller 100 then operates the first and second main rams 37 and 38 to urge the closure segment 30 from the bale forming state to the open state, and in turn to urge the bale discharge segment 24 from the bale forming state to the discharge state for discharging the circumferentially wrapped bale onto the bale wrapper 5 for end-to-end wrapping of the bale thereon. The microcontroller 100 then operates the first and second main rams 37 and 38 to return the closure segment 30 and the discharge segment 24 to the bale forming states, and operates the bale wrapper 5 to end-to-end wrap the circumferentially wrapped bale thereon. The wrapping of a bale on the bale wrapper 5 is described in PCT Patent Application Specification No. WO 02/076183. While the circumferentially wrapped bale is being wrapped on the bale wrapper 5, the tractor driver operates the tractor to recommence towing the combined baler/bale wrapper 1 along the windrow, so that the next bale is formed in the bale chamber 20 while the discharged bale is being wrapped on the bale wrapper 5.

While the pivot shaft 62 of the piston rod 48 of the first main ram 37 has been described as being slideably mounted in the limit slots 79 of the first and second limit members 77 and 78, it is envisaged that in some embodiments of the invention the first and second limit members 77 and 78 may be non-slideably connected to the pivot shaft 62, and the limit members would be provided to engage a pin or other such engagement member extending from the cross-member 50 or from the closure segment 30 between respective end stops, in order to limit relative movement between the first and second connectors 56 and 57, and in turn to limit relative movement between the closure segment and the first main ram 37. Needless to say, in some embodiments of the invention a single limit member may be provided. It is also envisaged that end stops could be provided mounted on the limit member or members instead of being formed by the opposite ends of limit slots.

It is also envisaged that any other suitable connecting mechanism besides the connecting mechanism 53 may be provided for mounting the secondary urging means to act between the closure segment and the first main ram 37.

It will also be appreciated that other suitable secondary urging means besides disc springs may be provided, such as any other resilient urging means, for example, a compression spring, and in some embodiments of the invention a tension spring could be provided for urging the closure segment 30 relative to the first main ram 37 into the first state thereof.

While the roller baler according to the invention has been described as being a part of a combined baler/bale wrapper, it will be readily apparent to those skilled in the art that the roller baler may be provided as a roller baler on its own.

It is also envisaged that in some embodiments of the invention the roller baler may comprise only two segments, namely, a fixed segment and a closure segment, each of which would define 180° of the periphery of the bale chamber, and in which case, typically, the closure segment would be pivotally connected to the fixed segment about an upper main pivot axis, and would pivot outwardly upwardly from the bale forming state to the open state so that in the open state, the formed bale would roll from the bale chamber onto the ground.

While the connecting mechanism has been described for connecting the closure segment to the piston rod of the first main ram 37, depending on how the first main ram 37 is connected between the closure segment and the fixed segment or the chassis, the connecting mechanism may be adapted for connecting the closure segment to the cylinder of the main ram 38.

It is also envisaged that in some embodiments of the invention instead of connecting the first main ram 37 to the closure segment through the secondary urging means, the first main ram 37 may be connected to either the chassis 7 or to the fixed segment 22 through the secondary urging means. Additionally, where the first main ram 37 is connected to the chassis 7 or to the fixed segment 22 through the secondary urging means, the secondary urging means may be connected to the piston rod or the cylinder of the first main ram 37, depending on how the main ram 38 is connected between the closure segment and the fixed segment or the chassis, as the case may be.

It is also envisaged that the first and second connecting means may be provided by any other suitable first and second connecting means besides the first and second connectors 56 and 57, and any such other first and second connecting means may, for example, be connected rigidly to the relevant main ram, and moveably connected to the closure segment.

It is also envisaged that in some embodiments of the invention the baler may comprise a roller baler comprising a bale chamber of fixed size, or a bale chamber of variable size.

While the disc springs have been described as being mounted on the carrier member of the second connecting means, it is envisaged that in some embodiments of the invention the disc springs may be mounted on a spigot extending from the first connecting means which would be slideably engageable with the second connecting means, or would be slideably engageable directly with the cross-member of the closure segment or any other element of the closure segment. Additionally, while the secondary spring system has been described as comprising eight disc springs, the secondary spring system may comprise any number of disc springs less than or greater than eight. While the secondary spring system may comprise only one disc spring, in general, it is envisaged that the secondary spring system would comprise at least two disc springs, which in general, would be series mounted, with the respective major concave surfaces of the two disc springs facing each other, or the respective major convex surfaces of the two disc springs facing each other. Alternatively, where two disc springs are provided the disc springs may be arranged in parallel with the major concave surface of one disc spring facing the major convex surface of the other disc spring. Needless to say, the disc springs may be arranged in different arrangements, for example, each set of parallel mounted disc springs may comprise one or more parallel mounted disc springs, and the number of pairs of series mounted disc springs, may be any number of series mounted disc springs from one pair to any number of pairs. Needless to say, the secondary urging means may be provided with any other suitable spring means.

While the baler has been described as forming a part of a combined baler/bale wrapper, it will be readily apparent to those skilled in the art that the baler may be provided as a standalone baler, without any bale wrapper.

While the baler according to the invention has been described for baling crop material to form a round bale thereof, it will be readily apparent to those skilled in the art that the baler may be used for baling any type of material suitable for baling into a round bale. The formed round bale of such material would be circumferentially wrapped as described, and may or may not be transferred to the bale wrapper for end-to-end wrapping thereof.

It will also be appreciated that while the guide means for guiding the movement of the first connecting means relative to the second connecting means has been described as comprising the guide post, it is envisaged that any other suitable guide means may be provided for guiding the first connecting means relative to the second connecting means. Indeed, it is envisaged that in some embodiments of the invention the guide means for guiding the first connecting means relative to the second connecting means may be independent entirely of the secondary urging means.

It is also envisaged that in some embodiments of the invention two secondary urging means may be provided which would be located between the closure segment and the respective first and second main rams. In which case, the second force value of the second urging force of each of the secondary urging means would be appropriately selected, and when the radial outward force exerted by the bale in the bale chamber on the closure segment exceeded the second force value of the second urging force applied by the two secondary urging means between the closure segment and the respective main rams, the closure segment would be angularly displaced about the main pivot axis for enabling determining of the bale in the bale chamber being in the nearing completion state.

## Claims

1. A bale press for forming material into a bale thereof, the bale press comprising a first part (12), a second part (14) moveable relative to the first part (12) into a bale forming state cooperating with the first part (12) to define therewith a bale chamber (20) in which the material is pressed to form the bale, and a primary urging means (37, 38) acting between the first part (12) and the second part (14) to urge the second part (14) towards the first part (12) into the bale forming state with a first urging force of a first force value, **characterised in that** a secondary urging means (54) acts between the primary urging means (37) and one of the first part (12) or the second part (14) to urge the primary urging means (37) or the corresponding one of the first part (12) or the second part (14) relative to the other one of the primary urging means (37) and the corresponding one of the first part (12) or the second part (14) into a first state thereof relative to each other with a second urging force with the second part (14) in the bale forming state, the second urging force being of a second force value less than the first force value of the first urging force, the secondary urging means (54) being responsive to an outward force exerted by the material in the bale chamber (20) on the second part (14) exceeding the second force value to permit limited relative movement between the primary urging means (37) and the corresponding one of the first part (12) or the second part (14) relative to the other one of the primary urging means (37) and the corresponding one of the first part (12) or the second part (14) from the first state thereof, and a monitoring means (83) monitoring the relative movement between the primary urging means (37) and the corresponding one of the first part (12) or the second part (14) from the first state thereof for producing a signal indicative of the relative movement between the primary urging means (37) and the corresponding one of the first part (12) or the second part (14) from the first state thereof.

2. A bale press as claimed in Claim 1 **characterised in that** the signal produced by the monitoring means (83) indicative of the relative movement between the primary urging means (37) and the corresponding one of the first part (12) or the second part (14) from the first state thereof is indicative of the formation status of a bale in the bale chamber (20), and an alerting means (100, 102) is provided for producing a first alert signal indicative of the formation status of the bale in the bale chamber (20) being in a nearing completion state in response to the signal produced by the monitoring means (83) being indicative of the formation status of the bale in the bale chamber (20) being in the nearing completion state.

3. A bale press as claimed in Claim 1 or 2 **characterised in that** the signal produced by the monitoring means (83) indicative of the relative movement between the primary urging means (37) and the corresponding one of the first part (12) or the second part (14) from the first state thereof is indicative of distance moved by the one of the primary urging means (37) and the corresponding one of the first part (12) or the second part (14) relative to the other one of the primary urging means (37) and the corresponding one of the first part (12) or the second part (14) from the first state thereof.

4. A bale press as claimed in any preceding claim **characterised in that** a limit means (77, 78) is provided to limit the relative movement between the primary urging means (37) and the corresponding one of the first part (12) or the second part (14) from the first state thereof to a predefined distance.

5. A bale press as claimed in claim 4 **characterised in that** the limit means (77, 78) is configured to connect the primary urging means (37) to the corresponding one of the first part (12) or the second part (14) bypassing the secondary urging means in response to the one of the primary urging means (37) and the corresponding one of the first part (12) or the second part (14) having moved relative to the other one of the primary urging means (37) and the corresponding one of the first part (12) or the second part (14) through the predefined distance from the first state thereof.

6. A bale press as claimed in Claim 5 **characterised in that** the alerting means (100, 102) is configured to produce the first alert signal in response to the signal produced by the monitoring means (83) being indicative of the one of the primary urging means (37) and the corresponding one of the first part (12) or the second part (14) having moved relative to the other one of the primary urging means (37) and the corresponding one of the first part (12) or the second part (14) through the predefined distance from the first state thereof.

7. A bale press as claimed in any preceding claim **characterised in that** a first connecting means (56) is provided for connecting the primary urging means (37) to the secondary urging means (54), and a second connecting means (57) is provided for connecting the secondary urging means (54) to the corresponding one of the first part (12) or the second part (14) to which the primary urging means (37) is connected through the secondary urging means (54) with the secondary urging means (54) acting between the first connecting means (56) and the second connecting means (57).

8. A bale press as claimed in Claim 7 **characterised in that** the first and second connecting means (56, 57) are moveably connected relative to each other to permit the relative movement between the primary urging means (37) and the corresponding one of the first part (12) or the second part (14) from the first state thereof.

9. A bale press as claimed in any preceding claim **characterised in that** the secondary urging means (54) comprises at least one disc spring (55) defining a major concave surface (89) and an opposite major convex surface (90).

10. A bale press as claimed in Claim 9 **characterised in that** the secondary urging means (54) comprises at least two of the disc springs (55) mounted in series with the major concave surfaces (89) or the major convex surfaces (90) of adjacent ones of the disc springs (55) facing each other.

11. A bale press as claimed in Claim 9 or 10 **characterised in that** the secondary urging means (54) comprises a plurality of the disc springs (55), the disc springs (55) being arranged in at least two sets (91) of disc springs (55) each set (91) of disc springs comprising at least two parallel mounted disc springs (55) with the major concave surface (89) of adjacent ones of the parallel mounted disc springs (55) of each set thereof facing the major convex surface (90) of the other adjacent one thereof, and the at least two sets (91) of the parallel mounted disc springs (55) being series mounted, with the major concave surfaces (89) or the major convex surfaces (90) of adjacent disc springs (55) of the adjacent sets (91) thereof facing each other.

12. A bale press as claimed in any of Claims 9 to 11 **characterised in that** each disc spring (55) comprises a central opening (74) extending therethrough, and the disc springs (55) are mounted on the first connecting means (56) or the second connecting means (57) with the one of the first or the second connecting means (56, 57) extending through and engaging the central openings (74) of the disc springs (55).

13. A bale press as claimed in any preceding claim **characterised in that** a guide means is provided for guiding the relative movement between the primary urging means (37) and the corresponding one of the first part (12) or the second part (14) from the first state thereof.

14. A bale press as claimed in any preceding claim **characterised in that** the bale press comprises a roller baler (3), and the first part (12) and the second part (14) of the roller baler (3) carry respective pluralities of bale rotating rollers (17) configured to define the periphery of the bale chamber (20) as a cylindrical bale chamber with the second part (14) defining approximately 180° of the periphery of the bale chamber (20) when the second part (14) is in the bale forming state, and the primary urging means (37) comprises at least one main hydraulic ram (37, 38).

15. A bale press as claimed in any preceding claim **characterised in that** the primary urging means (37) is connected to the second part (14) through the secondary urging means (54).
